Europäisches Patentamt

(19) European Patent Office

Office européen des brevets

(11) Publication number : **0 349 271 B1**

(12) **EUROPEAN PATENT SPECIFICATION**

(45) Date of publication of patent specification : **22.02.95 Bulletin 95/08**

(51) Int. Cl.⁶ : **G11B 11/10**

(21) Application number : **89306519.3**

(22) Date of filing : **27.06.89**

(54) **Magneto-optic memory device.**

(30) Priority : **28.06.88 JP 161976/88**

(43) Date of publication of application : **03.01.90 Bulletin 90/01**

(45) Publication of the grant of the patent : **22.02.95 Bulletin 95/08**

(84) Designated Contracting States : **DE FR GB NL**

(56) References cited :
EP-A- 0 192 256
EP-A- 0 216 634
EP-A- 0 226 168
EP-A- 0 347 882
GB-A- 2 169 742
US-A- 4 751 142

(56) References cited :
APPLIED OPTICS. vol. 23, no. 22, 15 November 1984, NEW YORK US pages 3972 -3973; Deguchi et al: "DIGITAL MAGNETOOPTIC DISK DRIVE"
IBM TECHNICAL DISCLOSURE BULLETIN vol. 26, no. 9, February 1984, Double :"INFORMATION CARD AND READER"

(73) Proprietor : **SHARP KABUSHIKI KAISHA**
**22-22 Nagaike-cho**
**Abeno-ku**
**Osaka 545 (JP)**

(72) Inventor : **Itoh, Yasuyuki**
**2-26-12-505, Minamiootsuka**
**Toshima-ku**
**Tokyo (JP)**
Inventor : **Takase, Takeo**
**2-29, Kashiwanoha-Kouen Jyutaku**
**Nakatoyofuta**
**Kashiwa-shi Chiba-ken (JP)**

(74) Representative : **Brown, Kenneth Richard et al**
**R.G.C. Jenkins & Co.**
**26 Caxton Street**
**London SW1H 0RJ (GB)**

**Description**

BACKGROUND OF THE INVENTION

1. Field of the Invention

The present invention concerns a magneto-optic memory device. More particularly, the present invention concerns a magneto-optic memory device for recording, reproducing, erasing, etc. of information by irradiating light such as lasers.

2. Description of the Prior Art

Recently, vigorous development has been conducted for magneto-optic memory devices as optical memory devices capable of recording, reproducing and erasing information.

Among all, those using thin films of amorphous alloy of rare earth transition metal as memory media have been noted in that recording bits are free from the effect of grain boundary and films of memory media of a large area can easily be prepared.

In particular, thin amorphous alloy films using terbium as the rare earth element such as TbFe, TbFeGd and TbFeCo have high coercive force Hc and, accordingly, have been noted particularly, and various studies have been made therefor.

However, when a magneto-optic memory device is constituted by using a memory medium formed with the above terbium series thin amorphous alloy film, that is, a magneto-optic memory film, no sufficient magneto-optic effect (Kerr effect and Faraday effect) can be obtained and, accordingly, S/N ratio in reproduced signals is not sufficiently high for practical use.

For improving such a problem, there has been proposed a magneto-optic memory device having a device structure known as a reflective film structure in which a dielectric film, a thin Tb-transition metal alloy film, a dielectric film and a reflective film are laminated in this order (see, for example, Applied Optics, Vol. 23, No. 22, P-3972 (1984); Japanese Laid-Open Patent Specification No. 57-12428; US Patents Nos. 4,390,600, 4,414,650 and 4,489,139).

Fig. 9 is a cross sectional side elevational view for a portion of a conventional magneto-optic memory device of a reflective film structure.

In Fig. 9, are shown a transparent substrate <u>a</u>, a transparent dielectric film <u>b</u> having a higher refractive index than that of the transparent substrate <u>a</u>, a thin Tb-transition metal alloy film <u>c</u>, a transparent dielectric film <u>d</u>, a reflective metal film <u>e</u>.

By the employment of the device structure described above, the Kerr rotational angle is remarkably increased and the S/N ratio in reproduced signals can also be improved, because if laser beam L is irradiated on the side of the transparent substrate <u>a</u> to the thin Tb-transition metal alloy film <u>c</u>, the incident laser beam L is reflected many times and self-interferes at the inside of the transparent dielectric film <u>b</u> to increase the apparent Kerr rotational angle.

However, since Tb is most reactive to oxygen among heavy rare earth elements and most expensive, the thin Tb-transition metal alloy film involves various problems in view of the reliability as the magneto-optic memory film and the cost.

In view of the above, it has been considered to use other rare earth-transition metal alloys, in particular, being composed of dysprosium which is less expensive among the heavy rare earth metals. Among them, it has heretofore been known that DyFeCo can be applied as amorphous alloy material for magneto-optic memory films (Japanese Laid-Open Patent Specification No. 58-73746). However, no sufficient study has been made for the practical use of a magneto-optic memory device made of the thin Dy-transition metal alloy film, and Japanese Laid-Open Patent Specification No. 58-73746 does not disclose specific data for magneto-optical characteristics and the device structure to be applied.

Application of DyFeCo to the magneto-optical memory device involves the following problems.

For instance, when the characteristics are compared between thin amorphous alloy films of TbFeCo and DyFeCo having identical curie point, they show substantially identical values for the Kerr rotational angle $\theta K$ and the reflectance R. However, for the magnetization Ms and the coercive force Hc near the compensation composition, DyFeCo shows lower Hc for an identical value Ms, and lower Ms for an identical value Hc as compared with those of TbFeCo.

Ms and Hc are determinative parameters for recording bit diameter <u>d</u> that presents stably upon recording information as represented by the following formula (1):

$$d \propto \frac{2\sigma\omega}{Ms \cdot Hc} \quad (1)$$

where

d : minimum bit diameter for stability

σω: magnetic wall energy

Accordingly, for obtaining a memory device of high density and large capacity, it is necessary to make the value d smaller and the product of Ms and Hc (Ms·Hc value) greater.

However, as has been described above, the Ms·Hc value of the thin DyFeCo alloy film is smaller as compared with that of the thin TbFeCo alloy film, and accordingly, the recording bit diameter is increased thereby making it difficult to provide a magneto-optic memory device of high density and high capacity.

## SUMMARY OF THE INVENTION

The present inventors have made an earnest study and, as a result, have found that a magneto-optic memory device, having high Ms·Hc value, of high density and large capacity and extremely suitable for practical use can be obtained by using a thin DyFeCo amorphous alloy film of a particular composition and a specific thickness as a magneto-optic memory film and adapting such a film to a conventional magneto-optic memory device of reflective film structure.

Accordingly, the present invention provides a magneto-optic memory device which includes a substrate and a magneto-optic memory film on said substrate, characterised in that said magneto-optic memory film comprises an amorphous rare earth-transition metal alloy having the composition formula of:

$$Dy_x(Fe_yCo_{1-y})_{1-x}$$

wherein x is 0.20 to 0.27 and y is 0.70 to 0.90, and the film thickness is from 10 to 50 nm.

A preferred magneto-optic memory device according to the invention comprises a dielectric film, a magneto-optic memory film, a dielectric film and a reflective film superposed in this order on a substrate, the magneto-optic memory film being composed of an amorphous rare earth-transition metal alloy having the composition formula of:

$$Dy_x(Fe_yCo_{1-y})_{1-x}$$

wherein x is 0.20 to 0.27 and y is 0.70 to 0.90, and having a thickness of 10 to 50 nm.

According to the magneto-optic memory device of the present invention, although the DyFeCo amorphous alloy is used as the magneto-optic memory film, a large recording bit diameter is provided which permits high density and large capacity recording.

Further, it provides high carrier level (CL), C/N ratio and low noise level (NL), jitter (J) and is also excellent in recording and reproducing characteristics.

Further, since inexpensive Dy is used as the rare earth metal, the cost is reduced.

## BRIEF DESCRIPTION OF THE DRAWINGS

Fig. 1 is a side elevational cross sectional view of a portion illustrating a constitution of one embodiment of a magneto-optic memory device according to the present invention;

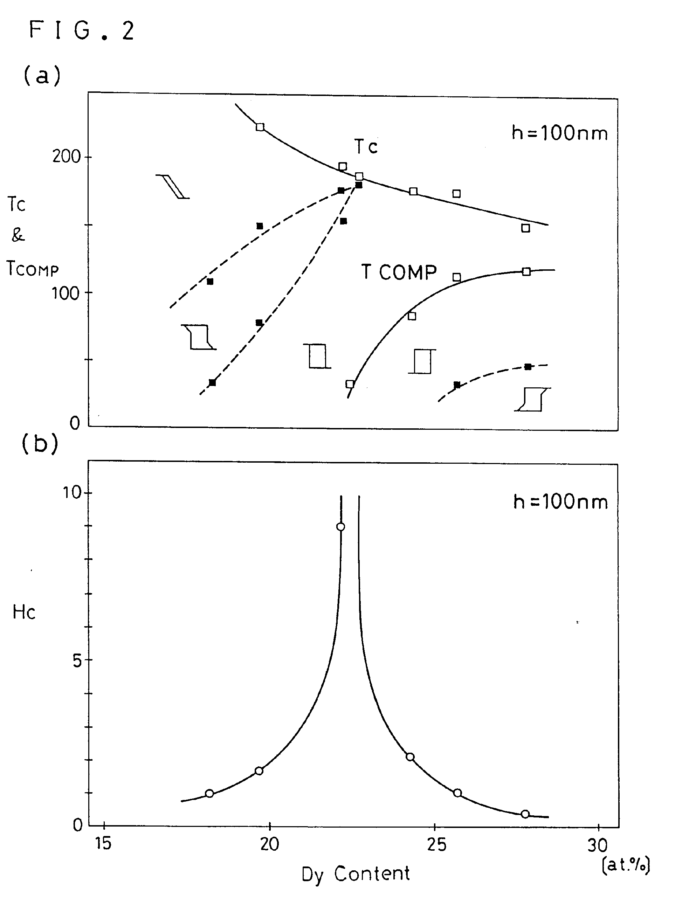

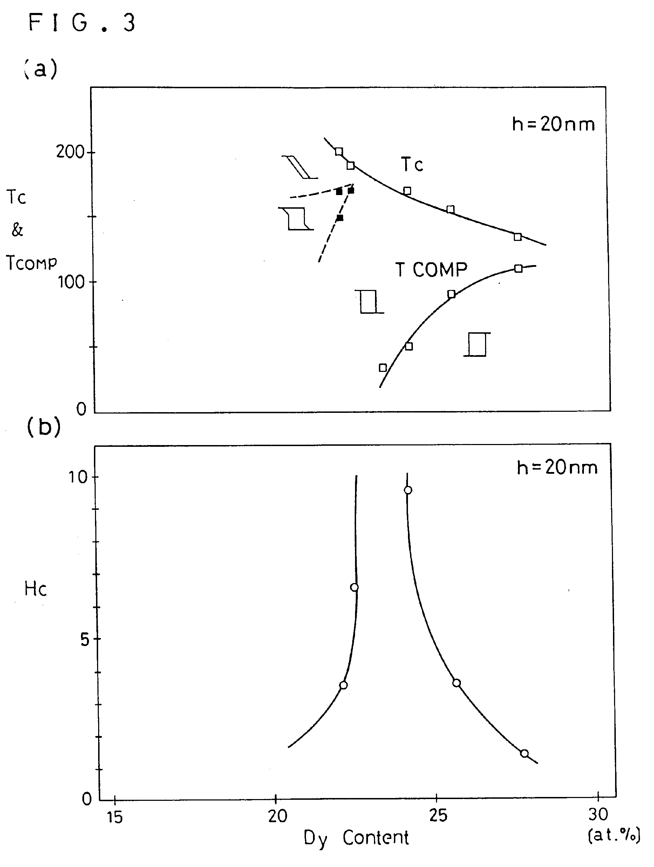

Figs. 2 and 3 are graphs illustrating the change of static characteristics when the Dy content is varied while keeping the Fe to Co content ratio constant in DyFeCo, in which Fig. 2 shows a case where the film thickness (h) of DyFeCo is 100 nm, while Fig. 3 shows a case where the film thickness of DyFeCo is 20 nm. (a) in each of the figures represents the change of curie point ($T_c$) and compensation temperature ($T_{comp}$), while (b) represents the change of the coercive force (Hc) at a room temperature. In (a) of these figures, the symbol shows the squareness of the Kerr loop, while the dotted line represents a region showing the squareness;

Fig. 4 is a graph illustrating the change of the Dy content for providing the compensation composition when the ratio of content between Fe and Co is varied in DyFeCo, for the cases in which the film thickness of DyFeCo is 100 nm and 20 nm in comparison with each other;

Fig. 5 is a graph illustrating the change of Ms·Hc value when the content of Dy is changed while keeping the content of the ratio between Fe and Co constant in DyFeCo, for the cases in which the film thickness of DyFeCo is 100 nm and 20 nm in comparison with each other;

Fig. 6 is a graph illustrating the change of Ms·Hc value in the compensation composition when the film thickness of DyFeCo is changed;

Fig. 7 is a graph illustrating the change of dynamic characteristics when the Dy content is varied while keeping the content ratio between Fe and Co constant in DyFeCo. (a) represents the change of carrier levels (CL) in reproduced signals, (b) illustrates the change of noise levels (NL) in reproduced signals, (c) illustrates the change of C/N ratio in reproduced signals, (d) illustrates the change of a recording laser power (Pw) and (e) shows the change of jitter (J) in reproduced signals;

Fig. 8 is a graph illustrating the change of characteristics when the content ratio between Fe and Co is changed while keeping the Dy content constant in DyFeCo, in which (a) shows the change of curie point, (b) shows the change of recording laser power and (c) represents the change of C/N ratio in reproduced signals; and

Fig. 9 is a side elevational cross sectional view illustrating the constitution of a conventional magneto-optic memory device.

## DESCRIPTION OF THE PREFERRED EMBODIMENT

The magneto-optic memory device of the present embodiment comprises a four-layer structure which is composed of a dielectric film, a magneto-optic memory film, a dielectric film and a reflective film superposed in this order. These four layers are usually arranged upward in this order on the substrate. They may be arranged downward in this order on the substrate. As the substrate, a light transmitting substrate, for example, of glass or plastic (for example, polycarbonate or polymethylmethacrylate) is suitable. The device is not limited specifically in its shape and can be, for example, in the form of a disc (magneto-optic disc) or a rectangle (magneto-optic card).

It is suitable that each of the dielectric films of the present device be a metal nitride film, such as silicon nitride, aluminium nitride, silicon-aluminium -nitride or like film. The metal nitride film may be doped with an element, such as yttrium, oxygen or carbon, to give a higher dielectric constant. Silicon oxide film may be used as the dielectric film. Such a dielectric film can be formed by a known process such as CVD, sputtering, ion plating or reactive vapour deposition. The dielectric film is formed on the substrate and also on the magneto-optic memory film. It is suitable that the thickness of the dielectric film be 50 to 100 nm on the substrate or 10 to 100 nm on the memory film.

The magneto-optic memory film of the invention is made of a rare earth transition metal alloy represented by the formula:

$$Dy_x(Fe_yCo_{1-y})_{1-x}$$

wherein x is 0.20 to 0.27 and y is 0.70 to 0.90.

If x is less than 0.20 or exceeds 0.27, it is not suitable since the Ms·Hc value is small to increase the recording bit diameter $\underline{d}$ and the recording-reproducing characteristics of the device are deteriorated. Further, if y is less than 0.70 or exceeds 0.90, it is not suitable from the viewpoint on the curie point (Tc) and the recording laser power (Pw). It is most preferable to adjust x as from 0.22 to 0.25 and y as from 0.75 to 0.85.

The magneto-optic memory film can be formed over the dielectric film on the substrate by a known process such as CVD, sputtering, ion plating or vapour deposition. The thickness of the memory film is adjusted from about 10 nm to about 50 nm. If the film thickness is less than 10 nm or exceeds 50 nm, it is not suitable since the Ms·Hc value is decreased and the recording bit diameter $\underline{d}$ is increased. The film thickness is preferably from 15 to 30 nm.

The memory film may be doped with a small amount of atoms of corrosion-resistant metal such as Cr, Ti, Al, Ta or Ni to prevent corrosion due to moisture.

The reflective film of the present device is a metal film capable of reflecting light efficiently and having high corrosion resistance, such as a film of aluminium, nickel, titanium, gold, silver, tellurium, stainless steel or like metal. The reflective film may be made of an alloy such as aluminium-nickel alloy, aluminium-titanium alloy or aluminium-palladium alloy.

Among them, use of a reflective film prepared from an aluminium-palladium alloy containing from 1 at% to 10 at% palladium is preferred. In particular, if the film of the aluminium-palladium alloy is used, it is possible to constitute a magneto-optic memory device of higher recording sensitivity in conjunction with other effects. For instance, it is possible to remarkably decrease the recording laser power (Pw) required for obtaining a desired C/N ratio as compared with that in the aluminium film.

The reflective film can be formed by a known process such as CVD, sputtering, ion plating or vapour deposition and is suitably 10 to 300 nm in thickness.

## EXAMPLES

### Example 1

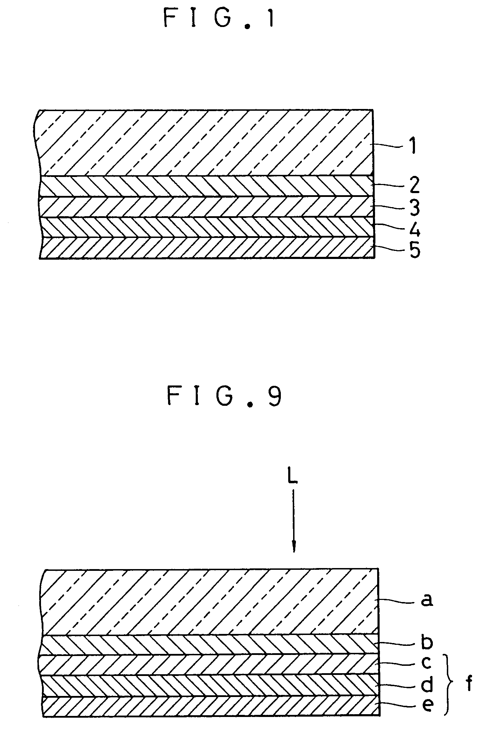

Fig. 1 shows a magneto-optic memory device (magneto-optic disc:130mmφ) as one embodiment of the present invention.

In Fig. 1, reference numeral 1 denotes a transparent substrate made of glass, and an AlN (aluminium nitride) film 2 as a first transparent dielectric film is formed in a thickness of 80 nm on the transparent glass substrate 1. Over the AlN film 2, a thin alloy film 3 of $DY_{0.235}(Fe_{0.8}Co_{0.2})_{0.765}$ (dysprosium, iron, cobalt) as a thin rare earth-transition metal alloy film is formed in a thickness of 20 nm, and an AlN film 4 as a second transparent dielectric film is formed in a thickness of 30 nm over the thin DyFeCo alloy film 3. Further, an alloy film 5 of $Al_{0.96}Pd_{0.04}$ (aluminium-palladium) as a reflective film is formed in a thickness of 50 nm on the AlN film 4.

In the constitution described above, recording was conducted by applying an auxiliary magnetic field H while irradiating laser beams from a semiconductor laser light source (not illustrated) at 830 nm wavelength through the glass substrate 1 onto the thin DyFeCo alloy film 3. Upon reproducing, information was read by irradiating the laser beams described above through the glass substrate 1 and receiving the reflection light by way of a photo-detector not illustrated.

Table 1 shows static characteristics and dynamic characteristics when information is recorded and reproduced by using the magneto-optic memory device with the constitution as described above. For the static characteristics, the coercive force Hc and the reflectance R to the semiconductor laser beam at 830 nm wavelength, apparent Kerr rotation angle θk, curie point Tc are shown. Further, as the dynamic characteristics, recording laser power Pw, reproducing performance C/N and jitter J for reproduced signals are shown. It can be seen that the device has sufficient performance as the optical memory for both of the characteristics.

## Table 1

| Hc<br>$(Am^{-1})$<br>[kOe] | R<br>(%) | θk<br>(deg) | Tc<br>(°C) | Pw<br>(mW) | C/N<br>(dB) | J<br>(ns) |
|---|---|---|---|---|---|---|
| >1.2 x $10^6$<br>[>15.0] | 15 | 1.7 | 180 | 7.5 | 60.1 | 2.2 |

Example 2

Static characteristics and dynamic characteristics were measured while variously changing values x and y in the $Dy_x(Fe_yCo_{1-y})_{1-x}$ film and its thickness h.

Specifically, for the static characteristics, a magneto-optic device of the same structure as that in Example 1 except for not forming the reflective film was constituted, and Ms, Hc, Kerr rotational angle θk, curie point Tc and compensation temperature Tcomp were measured.

As for the dynamic characteristics, a similar magneto-optic device to that in Example 1 was constituted, and carrier level CL for reproduced signals, noise level NL, reproducing performance C/N, recording laser power Pw and jitter J in reproduced signals were measured. Upon measuring the dynamic characteristics, the linear velocity for the rotation of the magneto-optic memory device (disc) was fixed to 10.4 m/s and the recording frequency of 1 MHz was applied.

At first, Hc, Tc and Tcomp were measured while setting y in the $Dy_x(Fe_y Co_{1-y})_{1-x}$ film to 0.8 (80 at%) and changing the value x in the case of the film thickness h of 100 nm and 20 nm respectively and the results are shown in Tables 2 and 3. Figs. 2 and 3 illustrate graphs obtained by plotting the measured values.

## Table 2

**Film thickness : 100 nm**

| Dy content x (at%) | Fe content y (at%) | Hc (Am$^{-1}$) [kOe] | Tc (°C) | Tcomp (°C) |
|---|---|---|---|---|
| 18.2 | 80.0 | $8.0 \times 10^4$ [1.0] | 250 | - |
| 19.7 | 80.0 | $1.4 \times 10^5$ [1.8] | 225 | - |
| 22.1 | 80.0 | $7.2 \times 10^5$ [9.0] | 190 | - |
| 22.6 | 80.0 | $>1.2 \times 10^6$ [>15] | 185 | - |
| 24.1 | 80.0 | $1.7 \times 10^5$ [2.1] | 180 | 80 |
| 25.7 | 80.0 | $8.0 \times 10^4$ [1.0] | 175 | 110 |
| 27.7 | 80.0 | $2.4 \times 10^4$ [0.3] | 150 | 115 |

## Table 3

**Film thickness : 20 nm**

| Dy content x (at%) | Fe content y (at%) | Hc (Am$^{-1}$) [kOe] | Tc (°C) | Tcomp (°C) |
|---|---|---|---|---|
| 22.1 | 80.0 | $2.9 \times 10^5$ [3.6] | 200 | - |
| 22.6 | 80.0 | $5.3 \times 10^5$ [6.6] | 185 | - |
| 24.1 | 80.0 | $7.6 \times 10^5$ [9.5] | 170 | 50 |
| 25.7 | 80.0 | $2.8 \times 10^5$ [3.5] | 155 | 90 |
| 27.7 | 80.0 | $1.1 \times 10^5$ [1.4] | 135 | 105 |

As can be seen from Figs. 2 and 3, such compensation compositions are present as having compensation temperatures being near to the room temperature. It is required to provide the compositions to adjust x = 0.22 - 0.23 for h = 100 nm and x = 0.23 - 0.24 for h = 20 nm. Thus, the content of the compensation composition varies depending on the film thickness h. However, it has been confirmed that the deviation in the composition is so small and negligible if the medium thickness h is within a range : 10 nm $\leq$ h $\leq$ 50 nm.

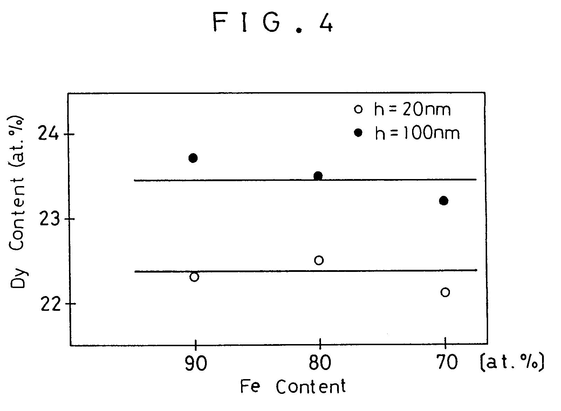

Then, Table 4 shows the change of the value x for providing the compensation composition in a case where the value y in the $Dy_x(Fe_yCo_{1-y})_{1-x}$ film is changed for the case of : h = 100 nm and h = 20 nm. Fig. 4 illustrates a graph obtained by plotting the values x. It can be seen from Fig. 4 that while the value x for the compensation composition varies depending on the film thickness h it shows no substantial change depending on the value y.

## Table 4

| Fe content | x (at%) for Compensation Composition | |
|---|---|---|
| y (at%) | Film thickness 100 nm | Film thickness 20 nm |
| 90.0 | 22.3 | 23.7 |
| 80.0 | 22.5 | 23.5 |
| 70.0 | 22.1 | 23.2 |

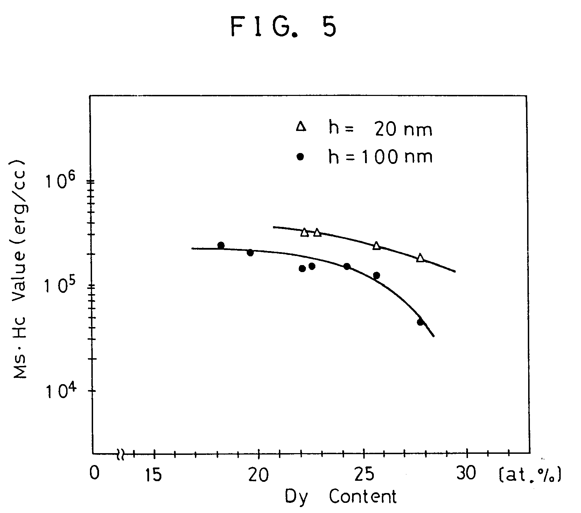

Then, Table 5 shows the Ms·Hc value when the value x is changed for $Dy_x(Fe_yCo_{1-y})_{1-x}$ film while fixing the value y = 0.8 for the cases where h = 100 nm and h = 20 nm respectively. Fig. 5 shows results obtained by plotting the values. As can be seen from Fig. 5, the Ms·Hc value is greater in a case where h = 20 nm and the stability of the recording bit is excellent in view of the equation (1) described above.

## Table 5

| Dy content x (at%) | Fe content y (at%) | Ms x Hc (* $10^5$ erg/cc) | |
|---|---|---|---|
| | | h = 100nm | h = 20 nm |
| 18.2 | 80.0 | 2.4 | – |
| 19.7 | 80.0 | 2.0 | – |
| 22.1 | 80.0 | 1.5 | 3.1 |
| 22.6 | 80.0 | 1.6 | 3.1 |
| 24.1 | 80.0 | 1.6 | – |
| 25.7 | 80.0 | 1.3 | 2.4 |
| 27.7 | 80.0 | 0.5 | 1.8 |

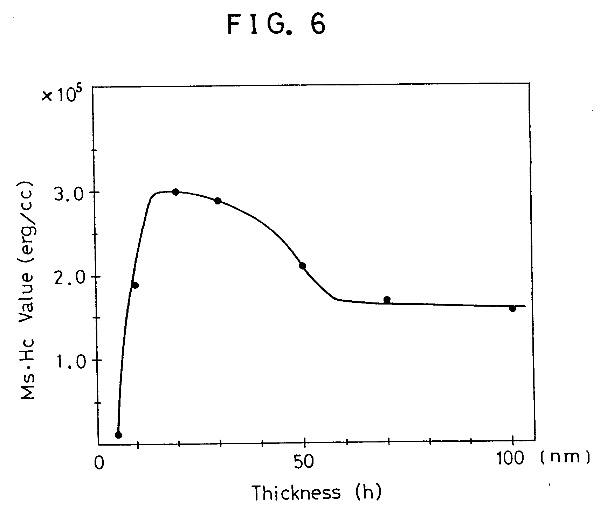

Further, Table 6 shows the change of the Ms·Hc value when the film thickness h is changed, provided that the composition is adjusted near the compensation composition in which the content of the transition metal is somewhat increased as compared with that of the compensation composition and Hc = $8.0 \times 10^5$ Am$^{-1}$ [10 kOe]. Fig. 6 shows a graph obtained by plotting the Ms·Hc values. While the stability of the recording bit is increased as the value for Hc is greater, values of about Hc = $8.0 \times 10^5$ Am$^{-1}$ [10 kOe] are selected here as sufficient for the magneto-optic memory device.

Table 6

| Film thickness (nm) | Dy content x (at%) | Fe content y (at%) | Ms x Hc ($*10^5$ erg/cc) |
|---|---|---|---|
| 100 | 22.1 | 80.0 | 1.5 |
| 70 | 22.3 | 80.0 | 1.7 |
| 50 | 22.5 | 80.0 | 2.1 |
| 30 | 22.7 | 80.0 | 2.9 |
| 20 | 22.8 | 80.0 | 3.1 |
| 10 | 23.6 | 80.0 | 1.9 |
| 5 | 24.5 | 80.0 | 0.1 |

In Fig. 6, it can be seen that as the film thickness h is increased greater than 50 nm, the Ms·Hc value is decreased. Further, if the film thickness h is reduced to less than 10 nm, magnetic properties are deteriorated and the Ms·Hc value is rapidly reduced depending on the change of the quality at the boundary or the partial oxidation thereof in the initial stage of forming the thin film. Accordingly, it can be seen that the range for the film thickness h that provides excellent characteristics as the memory medium is : 10 nm $\leq$ h $\leq$ 50 nm. Further, particularly preferred characteristics can be obtained with a range : 15 nm $\leq$ h $\leq$ 30 nm.

Accordingly, if the thickness of the magneto-optic memory film is reduced within a range as described above, it is possible to form a magneto-optic memory device of excellent stability for the recording bit with a small diameter.

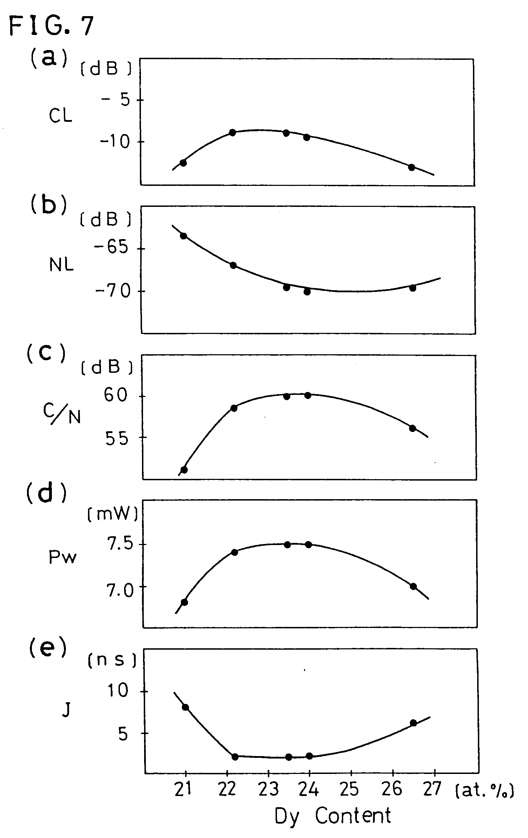

Then, dynamic characteristics were measured for the $Dy_x(Fe_yCo_{1-y})_{1-x}$ film by fixing y to 0.8, setting the film thickness h to 20 nm and varying the value x. Upon measurement, a magneto-optic memory device (comprising glass substrate/AlN film : 80 nm/DyFeCo film : 20 nm/AlN film : 30 nm/Al-Pd alloy film : 50 nm) was used as described above and a semiconductor laser giving laser beams at 830 nm wavelength was used as the light source. Table 7 shows the results of the measurement for the dynamic characteristics of the magneto-optic memory device used for the measurement. Further, Fig. 7 shows a graph obtained by plotting the measured values in Table 7.

Table 7

| Dy content x (at%) | Fe content y (at%) | -CL (dB) | -NL (dB) | C/N (dB) | Pw (mW) | J (ns) |
|---|---|---|---|---|---|---|
| 21.0 | 80.0 | 12.5 | 63.6 | 51.1 | 6.8 | 8.5 |
| 22.2 | 80.0 | 8.4 | 67.3 | 58.9 | 7.4 | 2.3 |
| 23.5 | 80.0 | 9.0 | 69.1 | 60.1 | 7.5 | 2.2 |
| 24.0 | 80.0 | 9.3 | 69.6 | 60.3 | 7.5 | 2.1 |
| 26.5 | 80.0 | 12.6 | 69.2 | 56.6 | 7.0 | 6.3 |

As apparent from Fig. 7, the carrier level CL is increased, while the noise level NL is reduced in the reproduced signal to result in a maximum reproduced C/N at about $x = 0.235$ as the Dy content for the compensation composition. Further, it can also be seen that the jitter J in the reproduced signals is made minimum near the compensation composition. While the recording laser power Pw is increased near the compensation composition, this can be reduced by changing the value for y as described later.

The value Pw is reduced in the region at the right side of Fig. 7 where the value x is greater, because Tc is lowered as the value x becomes greater as can be seen from Fig. 3. Further, since $\theta$k is also reduced together with the reduction of Tc, the carrier level CL is also reduced.

Both of Pw and CL are reduced irrespective of the increase of Tc and $\theta$k is increased in the region to the left of Fig. 7 in which the value x is smaller, because a leaking magnetic field gives a significant effect upon forming the recording bit due to greater value for Ms, thereby causing the similar effect to that of increased auxiliary magnetic field, to reduce Pw and the contrast is also reduced to lower CL since re-inversion region results in the recording bit. Further, since the peripheral portion of the recording bit is influenced simultaneously, the recording bit length distribution becomes greater, by which NL and J are increased.

Further, although not shown in Fig. 7, the dynamic characteristics are deteriorated more as the value x departs from the compensation composition to within a range: $x < 0.20$ or $x > 0.27$.

From the foregoing, the range of composition giving excellent dynamic characteristics is substantially : $0.20 \leq x \leq 0.27$ and, particularly excellent dynamic characteristics can be obtained within a range : $0.22 \leq x \leq 0.25$ near the compensation composition.

Although the data are shown here only for the case : $y = 0.8$, it has been demonstrated by the experiment of the present inventors that the range for the value x providing excellent dynamic characteristics is substantially the same for the case where the value y is changed in the specific range.

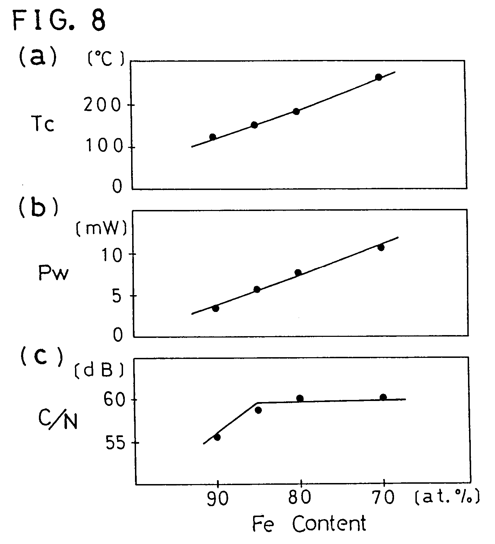

Then, Table 8 shows the result of the measurement for Tc, Pw, C/N ratio in a case where the value x is fixed to 0.235 which is a satisfactory value for dynamic characteristics and the value y is varied in the $Dy_x(Fe_y Co_{1-y})_{1-x}$ film. Further, Fig. 8 shows a graph obtained by plotting the measured values in Table 8. Upon measuring, both of the film constitution of the disc and the optical system used are identical with those described hereinbefore.

9

## Table 8

| Dy content x (at%) | Fe content y (at%) | Tc (°C) | Pw (mW) | C/N (dB) |
|---|---|---|---|---|
| 23.5 | 90.0 | 125 | 3.0 | 56.0 |
| 23.5 | 85.0 | 150 | 5.5 | 58.7 |
| 23.5 | 80.0 | 180 | 7.5 | 60.1 |
| 23.5 | 70.0 | 230 | 11.5 | 59.8 |

As can be seen from Fig. 8, while both of Tc and Pw increase linearly as the value y is decreased, the value C/N shows no substantial change. Accordingly, the range for the value y suitable for use is determined in view of the allowable upper limit value for the recording power. In this case, if a semiconductor laser is used, it is desirable to set the recording laser power to 10 mW or less in view of the durability of the semiconductor laser. Further, upon measuring the data in Fig. 8, although a glass substrate was used for the substrate, it has been demonstrated by the experiment made by the present inventors that the recording laser power can be economized by about 1 - 2 mW by using a plastic substrate made of plastic such as PMMA. Meanwhile, it has been also demonstrated by the experiment of the present inventors that Tc has to be higher than about 130°C in order that the recording bit is not changed during reproduction by the temperature elevation by the laser power. In view of the foregoing , it is necessary that the value for y is within the range : $0.70 \leqq y \leqq 0.90$.

Although the data shown here are only for the case where the value x is defined for the compensation composition, it has been demonstrated by the experiment of the present inventors that the range for a preferred value y is substantially the same as the value described above also in a case where the value x changes within a range : $0.20 \leqq x \leqq 0.27$

From the foregoing , amorphous alloy film of $Dy_x(Fe_yCo_{1-y})_{1-x}$ wherein x is 0.20 to 0.27 and y is 0.70 to 0.90 and having a thickness of 10 nm to 50nm is preferable and practically usable as a medium for the magneto-optic memory device of a reflective film structure.

Especially, the amorphous alloy film of the formula wherein x is 0.22 to 0.25 and y is 0.75 to 0.85 and having a thickness of 15 nm to 30nm shows excellent effects as a medium for the device.

## Claims

1. A magneto-optic memory device comprising a dielectric film, a magneto-optic memory film, a dielectric film and a reflective film superposed in this order on a substrate, the magneto-optic memory film being composed of an amorphous rare earth-transition metal alloy having the composition formula of:
$$Dy_x(Fe_yCo_{1-y})_{1-x}$$
wherein x is 0.20 to 0.27 and y is 0.70 to 0.90, and having a thickness of 10 to 50 nm.

2. The magneto-optic memory device of claim 1 in which the amorphous rare-earth transition metal alloy is of the formula wherein x is 0.22 to 0.25 and y is 0.75 to 0.85.

3. The magneto-optic memory device of claim 1 in which the magneto-optic memory film has a thickness of 15 to 30 nm.

4. The magneto-optic memory device of claim 1 in which the substrate is a light transmitting substrate.

5. The magneto-optic memory device of claim 1 in which each of the dielectric films is made of a metal nitride.

6. The magneto-optic memory device of claim 5 in which the metal nitride is silicon nitride, aluminium nitride or silicon- aluminium nitride.

7. The magneto-optic memory device of claim 1 in which the reflective film is a metal film.

8. The magneto-optic memory device of claim 7 in which the metal film is made of an aluminium -nickel alloy, an aluminium-titanium alloy or an aluminium-palladium alloy.

9. The magneto-optic memory device of claim 7 in which the metal film is made of aluminium-palladium alloy containing 1 at.% to 10 at.% of palladium.

10. The magneto-optic memory device of claim 1 in the form of a magneto-optic disc or a magneto-optic card.

11. A magneto-optic memory device which includes a substrate (1) and a magneto-optic memory film (3) on said substrate, characterised in that said magneto-optic memory film (3) comprises an amorphous rare earth-transition metal alloy having the composition formula of:

$$Dy_x (Fe_y Co_{1-y})_{1-x}$$

wherein x is 0.20 to 0.27 and y is 0.70 to 0.90, and the film thickness is from 10 to 50 nm.

## Patentansprüche

1. Magnetooptisches Speichergerät mit einem dielektrischen Film, einem magnetooptischen Speicherfilm, einem dielektrischen Film und einem Reflexionsfilm, die in dieser Reihenfolge auf einem Substrat übereinander angeordnet sind, wobei der magnetooptische Speicherfilm aus einer amorphen Seltenerd-Übergangsmetall-Legierung mit der folgenden Zusammensetzungsformel besteht:

$$Dy_x(Fe_yDo_{1-y})_{1-x},$$

wobei x 0,20 bis 0,27 und y 0,70 bis 0,90 beträgt und die Dicke 10 bis 50 nm ist.

2. Magnetooptisches Speichergerät nach Anspruch 1, bei dem die amorphe Seltenerd-Übergangsmetall-Legierung einer Formel genügt, bei der x 0,22 bis 0,25 und y 0,75 bis 0,85 sind.

3. Magnetooptisches Speichergerät nach Anspruch 1, bei dem der magnetooptische Speicherfilm eine Dicke von 15 bis 30 nm aufweist.

4. Magnetooptisches Speichergerät nach Anspruch 1, bei dem das Substrat ein lichtdurchlässiges Substrat ist.

5. Magnetooptisches Speichergerät nach Anspruch 1, bei dem jeder der dielektrischen Filme aus einem Metallnitrid besteht.

6. Magnetooptisches Speichergerät nach Anspruch 5, bei dem das Metallnitrid Siliziumnitrid, Aluminiumnitrid oder Siliziumaluminiumnitrid ist.

7. Magnetooptisches Speichergerät nach Anspruch 1, bei dem der Reflexionsfilm ein Metallfilm ist.

8. Magnetooptisches Speichergrät nach Anspruch 7, bei dem der Metallfilm aus einer Aluminium-Nickel-Legierung einer Aluminium-Titan-Legierung oder einer Aluminium-Palladium-Legierung besteht.

9. Magnetooptisches Speichergerät nach Anspruch 7, bei dem der Metallfilm aus einer Aluminium-Palladium-Legierung besteht, die 1 Atom-% bis 10 Atom-% Palladium enthält.

10. Magnetooptisches Speichergerät nach Anspruch 1 in Form einer magnetooptischen Platte oder einer magnetooptischen Karte.

11. Magnetooptisches Speichergerät, das ein Substrat (1) und einen magnetooptischen Speicherfilm (3) auf dem Substrat enthält, **dadurch gekennzeichnet,** daß der magnetooptische Speicherfilm (3) eine amorphe Seltenerd-Übergangsmetall-Legierung mit der folgenden Zusammensetzungsformel enthält:

$$Dy_x(Fe_yDo_{1-y})_{1-x},$$

wobei x 0,20 bis 0,27 und y 0,70 bis 0,90 beträgt und die Dicke 10 bis 50 nm ist.

## Revendications

1. Dispositif de mémoire magnéto-optique comprenant un film diélectrique, un film de mémoire magnéto-optique, un film diélectrique et un film réflecteur superposés dans cet ordre sur un substrat, le film de mémoire magnéto-optique étant composé d'un alliage amorphe terre rare-métal de transition ayant pour formule de composition :

$$DY_x(Fe_yCo_{1-y})_{1-x}$$

dans laquelle x est 0,20 à 0,27 et y est 0,70 à 0,90, et ayant une épaisseur de 10 à 50 nm.

2. Dispositif de mémoire magnéto-optique selon la revendication 1, dans lequel l'alliage amorphe terre rare-métal de transition a pour formule celle dans laquelle x est 0,22 à 0,25 et y est 0,75 à 0,85.

3. Dispositif de mémoire magnéto-optique selon la revendication 1, dans lequel le film de mémoire magnéto-optique a une épaisseur de 15 à 30 mm.

4. Dispositif de mémoire magnéto-optique selon la revendication 1, dans lequel le substrat est un substrat transmettant la lumière.

5. Dispositif de mémoire magnéto-optique selon la revendication 1, dans lequel chacun des films diélectriques est constitué d'un nitrure métallique.

6. Dispositif de mémoire magnéto-optique selon la revendication 5, dans lequel le nitrure métallique est le nitrure de silicium, le nitrure d'aluminium ou un nitrure de silicium-aluminium.

7. Dispositif de mémoire magnéto-optique selon la revendication 1, dans lequel le film réflecteur est un film métallique.

8. Dispositif de mémoire magnéto-optique selon la revendication 7, dans lequel le film métallique est constitué d'un alliage aluminium-nickel, d'un alliage aluminium-titane ou d'un alliage aluminium-palladium.

9. Dispositif de mémoire magnéto-optique selon la revendication 7, dans lequel le film métallique est constitué d'un alliage aluminium-palladium contenant 1 % atomique à 10 % atomiques de palladium.

10. Dispositif de mémoire magnéto-optique selon la revendication 1, se présentant sous la forme d'un disque magnéto-optique ou d'une carte magnéto-optique.

11. Dispositif de mémoire magnéto-optique incluant un substrat (1) et un film de mémoire magnéto-optique (3) sur ledit substrat, caractérisé en ce que ledit film de mémoire magnéto-optique (3) comprend un alliage amorphe terre rare-métal de transition ayant pour formule de composition :

$$DY_x(Fe_yCo_{1-y})_{1-x}$$

dans laquelle x est 0,20 à 0,27 et y est 0,70 à 0,90, et l'épaisseur du film est de 10 à 50 nm.

FIG.1

FIG.9

F I G . 2

(a)

(b)

FIG. 3

(a)

(b)

# F I G . 4

# F I G. 5

# FIG. 6

# FIG. 7

FIG. 8